Europäisches Patentamt

European Patent Office

Office européen des brevets

(19)

Publication number: **0 303 742**
**A1**

## (12) EUROPEAN PATENT APPLICATION

(21) Application number: **87307160.9**

(22) Date of filing: **13.08.87**

(51) Int. Cl.⁴ **G02B 27/00**

(43) Date of publication of application:
**22.02.89 Bulletin 89/08**

(84) Designated Contracting States:
**DE FR GB IT NL**

(71) Applicant: **KAISER AEROSPACE & ELECTRONICS CORPORATION**
**300 Lakeside Drive**
**Oakland California 94666(US)**

(72) Inventor: **Chen, Muh-Fa**
**300 Tramway Drive**
**Milpitas California 95035(US)**

(74) Representative: **Robinson, Anthony John Metcalf et al**
**Kilburn & Strode 30 John Street**
**London, WC1N 2DD(GB)**

(54) **Head-up display.**

(57) A head-up display (30) for aircraft cockpits comprises an optical system for directing an image produced by a CRT 12 onto a partly-reflective screen in the pilot's field of view. The optical system is kept compact by using a prism (36) having at least one curved face which acts as a lens. This allows a large field of view for a small optical system.

FIG. 2

EP 0 303 742 A1

## HEAD-UP DISPLAY

The present invention relates to "head-up" display sytems and, more particularly, to a head-up display system capable of being packaged in a small enclosure while providing a large instantaneous field of view to the viewer.

Many vehicles and especially aircraft, have been fitted with optical systems that project an image which, to the operator, appears to be a part of the real world scene that is viewed from the interior of the vehicle. The earliest applications of the concept were gun sight aiming systems in which a target reticle was provided which the vehicle operator could use to align the vehicle with a target and which would thereby aim the vehicle weapons systems at the selected target.

These optical systems have been utilized in aircraft and in some weapons systems that were not even part of a vehicle. In recent years, head-up display systems have become a vital part of the cockpit of fighter and attack aircraft, and, to a lesser extent, have been employed in commercial aircraft. Special head up displays have been employed in some spacecraft and are in use in the space shuttles.

In recent years, with the advent of more sophisticated computer systems and symbol generation techniques, head up display systems have been used to place more information in the greater field of view of the vehicle operator or pilot so that it becomes less necessary to look away from the scene normally visible through the windscreen in order to glance at the instrument panel. Providing the head up display enables the pilot to pay more attention to the situation around him and avoids need to refocus his eyes, which would otherwise be required if the instrument panel were to be read.

Head up displays of the prior art, such as that shown in US-A- 4,001,499 include electronic image generating means which create a visible image on a cathode ray tube ("CRT"). Because of the crowded conditions in the instrument panel, and the elongated nature of the CRT, the assembly is generally packaged in a substantially rectangular box that is placed with its long axis generally parallel to the axis of the aircraft. The images thus produced will then appear on the face of the CRT located somewhat below the line of the pilot's sight through the windscreen, which defines the aircraft "over the nose vision" line.

The generated image must then be projected vertically to a semi reflective combiner screen through which the pilot views the scene exterior to the windscreen. To the pilot's eye, the exterior scene will then include the generated images, which may include altitude and attitude information, numerical information relative to course and speed, and may also include gun sight features, as well, which could be related to the aircraft weapons systems, in the case of military aircraft.

As shown in prior art systems, a reflective mirror was generally used to fold the optical path upward and towards the combiner screen. In order to obtain a large instantaneous field of view, a relatively large optical system was required. This, in turn, requires that the "box" in which the optics were housed have considerable height.

Within an aircraft cockpit, there are certain constraints to the placement of any instrument, including the head-up display. First, there is the over-the-nose-vision line-of-sight out of the windscreen which should not be occluded in order to afford maximum visibility of the airspace surroundng the aircraft. Certainly, when taking off, landing or taxiing, there is a need that the pilot have an unobstructed view of the ground and the objects in the path of the aircraft.

Another constraint is the interior of the windscreen which dictates the height, placement and orientation of any combiner screens that may be utilized. Finally, there is an "ejection" line which defines an area that must remain unobstructed if the pilot is forced to eject from the aircraft. This limits the extent to which instruments can intrude into the cockpit.

Because of these constraints on the space available in the instrument panel, it would be highly desirable to reduce the height, width and lenght dimensions of the display to the greatest extent possible while providing the maximum instantaneous field of view of the projected image which, ideally, would be coextensive with the pilot's field of view through the windscreen. Where prior art devices utilized a mirror to fold its optical path upward into the combiner screen, a rather large optics package, especially in height, was required to cover the instantaneous field of view without compromising the optical system performance.

According to the present invention a head-up display is characterised by image generating means; image combining means positioned in the line of sight between an operator and a scene to provide an apparent superposition of a generated image on the scene visible to the operator; image collimating means arranged to apply an image generated by the image generating means to the image combining means, including a prism having at least one curved face, the prism being in optical communication with the image generating means and arranged to direct the generated image via the curved face to the image combining means. Preferably, the apparent image, as visible to the operator, is at infinity.

Thus, in the present invention, a prism is a part of the collimating optics system and a lens may (but need not) be an integral part of the prism, taking the form of a curved exit or both entrance and exit faces of the prism. Utilizing a curved exit surface, an even larger field of view can be achieved with a shorter vertical dimension in the optics. The use of a prism in a converging space can result in a head up display unit which occupies a small horizontal, vertical and longitudinal space in the cockpit and yet provides a large field of view to the pilot.

The invention may be carried into practice in a number of ways and several different head-up displays embodying the invention will now be described, by way of example, with reference to the accompanying drawings in which like numerals refer to like parts throughout, and in which

FIGURE 1 is an idealized side section view of a typical prior art head-up display system;

FIGURE 2 is a similar view of a compact display system according to one embodiment of the present invention;

FIGURE 3 is a similar view of a preferred embodiment of a compact display system according to the present invention; and

FIGURE 4 is a similar view of an embodiment in which the curved prism element has been split into two elements.

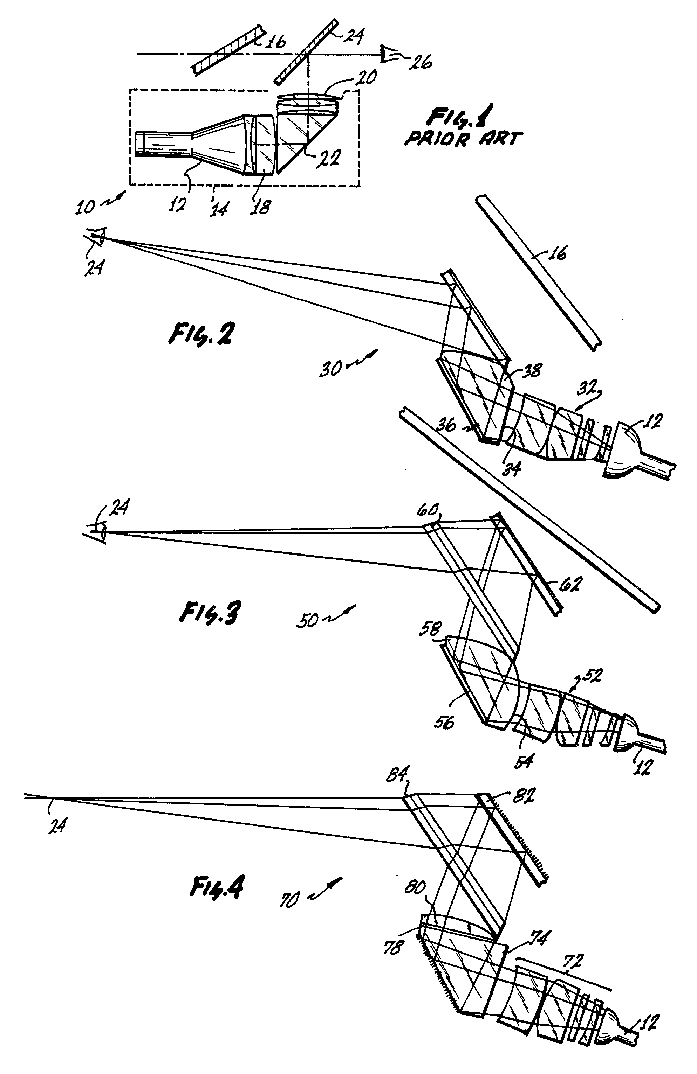

Turning first to FIG. 1, there is shown a prior art head up display system 10 such as is illustrated in US-A-4,001,499. A CRT 12 is housed in an enclosure 14 which is mounted in an aircraft cockpit beneath the windscreen 16. A lens system 18, 20 directs images which are generated on the face of the CRT 12 to a mirror 22 which folds the optical path upward to a combiner screen 24.

The combiner screen 24, is partially reflective and partially transmissive so that an exterior scene can be viewed through the combiner screen 24 and the windscreen 16. The images which are reflected from the combiner screen 24 are directed to the eye 26 of the viewer such that the image appears to the viewer as if it were located at infinity.

In this system, the size of the lens system 20 determines the instantaneous field of view that can be seen at that viewing position. It is therefore desirable to have this limiting aperture (lens system 20) as big and located as close as possible to the viewer's (pilot's) eye in order to attain maximum instantaneous field of view. Due to the space constraints in the cockpit, however, the size of the limiting aperture and its possible locations are limited.

A major disadvantage of the prior art head up display system 10 was that if one wished to see a large instantaneous field of view, a rather large optical combination was required. Because area and volume are rather critical when considering the limited space available in a crowded cockpit, requiring a large optical combination forces a compromise of the size of the field of view with the space available to the head up display system.

Turning next to FIG. 2, there is shown a typical head up display system 30 according to the present invention. As in the prior art, a CRT 12 is used to generate a display which is to appear to be superimposed over the real world scene which is viewed by the observer. A multi-element lens system 32 directs the optical image to the entrance face 34 of a folding prism 36. The exit face 38 of the prism 36 is curved which is the limiting aperture of the optical system.

Using a curve-surfaced fold prism allows the limiting aperture, exit surface 38, to stay as close as possible to the pilot or viewer's eye. Replacing the fold mirror with a prism enables the optical system to remain compact. The prism functions as a folding element and increases its optical path length such that the optical system can be folded in a shorter space than its mirror-folding system counterpart. Furthermore, the use of a prism in a converging space reduces the size of the optical system 32 following the prism.

Turning next to FIG. 3, there is shown a preferred embodiment of the present invention. A display system 50 includes a CRT 12 which is mounted in a suitable housing in the cockpit of an aircraft. A lens system 52 directs the images formed on the CRT 12 to a curved entrance face 54 of a folding prism 56.

The folding prism 56 redirects the image upward through a curved exit face 58 and through first and second combiner screens 60, 62 which are semi transparent. Each reflects a portion of the image to the eye 24. The use of two combiner screens 60, 62 permit a greater field of view since each can transmit a part of the image that is out of the "sight" of the other.

Finally, in FIG. 4, a display system 70 includes a CRT 12 which is the image source. A first group of lenses or optical elements 72 directs the images formed on the face of the CRT 12 to the flat entrance face 74 of the folding prism 76. The folding prism 76 redirects the images upwardly through the flat exit face 78 of the prism 76 and a second group of lenses or optical elements 80 to two combiners 82, 84 which are semi transparent, each reflecting a portion of the image to a viewer's eye 24. By splitting the curved-surfaced folding prism into a flat-surfaced prism and a second group of lenses may simplify the fabrication of the folding prisms and reduce the costs.

Thus there has been shown and described an improved cockpit display system with enhanced field of view in a more compact envelope. A folding prism is provided with an exit face that is effectively a thick lens that may but need not be integral with the prism. The thick prism lens may be split from the prism into a separate assembly. In the preferred embodiment, both the entrance and exit faces are curved. However, the same effect can be achieved by using a flat surfaced prism together with appropriate lens assemblies adjacent the prism faces. The collimating optics including the prism lenses are designed to result in an extremely compact display system with a large instantaneous field of view for the generated display which would otherwise require larger optical elements to attain the same field of view using the prior art approaches.

Those who are skilled in the art will be able to utilize and modify the present disclosure in accordance with the teachings set forth herein.

## Claims

1. A head-up display (30;50;70) characterised by image generating means (12); image combining means (60, 62; 82, 84) positioned in the line of sight between an operator and a scene to provide an apparent superposition of a generated image on the scene visible to the operator; image collimating means, arranged to apply an image generated by the image generating means to the image combining means, including a prism (36; 56; 76) having at least one curved face (38; 54, 58; 80), the prism being in optical communication with the image generating means (12) and arranged to direct the generated image via the curved face to the image combining means.

2. A head-up display as claimed in claim 1 in which the said curved face is an exit face (58; 80) of the prism (56; 76).

3. A head-up display as claimed in claim 1 in which the said curved face is an entrance face (34; 54) of the prism (36; 56).

4. A head-up display as claimed in claim 3 in which the prism (56) has a second curved face (58) comprising an exit face.

5. A head-up display as claimed in any one of the preceding claims in which the prism is arranged for reflection of the generated image through substantially a right angle.

6. A head-up display as claimed in any one of the preceding claims in which the image collimating means comprises an integral unit.

7. A head-up display as claimed in any one of the preceding claims in which the image collimating means further includes a first lens (32; 52) arranged to direct the generated image from the image generating means (12) in a direction substantially parallel to the line of sight.

8. A head-up display as claimed in any one of the preceding claims in which the curved surface comprises the limiting aperture of the image collimating means.

9. A head-up display as claimed in any one of the preceding claims, for a vehicle, the image combining means being adapted for location between an operator of the vehicle and his line of sight through a windscreen (16) thereof.

FIG.1
PRIOR ART

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| X | GB-A-1 264 343 (PERKIN ELMER) <br> * figure 2, page 2, lines 33-43 * <br> --- | 1,3 | G 02 B 27/00 |
| A | GB-A-2 163 869 (GEC AVIONICS LTD.) <br> * figure 1 * <br> --- | 1-9 | |
| A | DE-B-2 430 148 (OLYMPUS OPTICAL) <br> * figure 5 * <br> --- | 2-8 | |
| A | US-A-3 918 072 (T. IMAI et al.) <br> * figure 1 * <br> ----- | 2-8 | |

TECHNICAL FIELDS
SEARCHED (Int. Cl.3)

G 02 B 27/00

The present search report has been drawn up for all claims

| Place of search | Date of completion of the search | Examiner |
|---|---|---|
| BERLIN | 03-02-1988 | FUCHS R |